# EUROPEAN PATENT APPLICATION

(11) **EP 2 239 105 A2**
(43) Date of publication of application: **13.10.2010**
(21) Application number: 10156961.4
(22) Date of filing: 18.03.2010
(51) Int. Cl.: B25J 9/06, G21C 17/01

(54) **Manipulator for remote activities in a nuclear reactor vessel**

(30) Priority: 30.03.2009 US 385036
(71) Applicant: GE-Hitachi Nuclear Energy Americas LLC, Wilmington, NC 28401 (US)
(72) Inventor: Offer, Henry, Los Gatos, CA 95033-9472 (US); Welsh, Christopher, Livermore, CA 94550-8639 (US); Jones, William Dale, Phoenix, AZ 85007 (US); Broaddus, Mark, Rohnert Park, CA 94928-1446 (US); Runkle, Gary, San Jose, CA 95132 (US)
(74) Representative: Gray, Thomas

(57) **Abstract**

A manipulator (10) for remotely controlled underwater operation in a nuclear radiation environment to perform service activities at difficult to access regions of the reactor vessel is disclosed. The manipulator (10) includes six degrees of freedom in its ability to move so that it can get past obstructions inside a reactor vessel to access and service remote locations in the vessel. The manipulator (10) also includes an axial (12) drive for inserting and removing the manipulator (10) into and from a reactor vessel and for rotating the manipulator (10) within the vessel. It also includes an arm (20) with two rotary joints (18,40) and three pivot joints (34,36,42) that can be deployed for better access to difficult to reach locations. The manipulator (10), which is remotely operated, can be used to manipulate a variety of tools (48,90,94) to perform various service activities. The tools (48,90,94), which are attached to the end of the arm (20), include a water jet (48), a gripper (90), a cutter (94) and a camera.

## Description

The present invention relates to nuclear power plants, and, more particularly, to a tool to assist in mitigating stress corrosion cracking in welds in components located in nuclear reactor vessels.

### BACKGROUND OF THE INVENTION

Operating experience over time with nuclear power plants has shown that ineffective control of the aging degradation of reactor vessel components can jeopardize plant safety and plant life. Aging in such components needs to be effectively managed to ensure plant safety so that adequate safety margins remain, i.e., integrity and functional capability in excess of normal operating requirements.

Boiling water reactor ("BWR") nuclear power plants have been in commercial operation in certain countries for quite some time. It has been found that, during this period, some internal reactor components made from Stainless Steel and Inconel 182 welding materials have experienced stress corrosion cracking ("SCC"), the term given to crack initiation and sub-critical crack growth of susceptible alloys under the influence of tensile stress and a "corrosive" environment, such as the BWR environment.

To proactively mitigate stress corrosion cracking in BWR internal components and welds, some BWR owners have initiated preventive maintenance programs that include the repair and replacement of SCC susceptible internal reactor components and the brushing of component welds to mitigate stress corrosion cracking of the weld areas. One concern with regard to the brushing of internal component welds is gaining access to welds that are remotely located, so as to be difficult to reach.

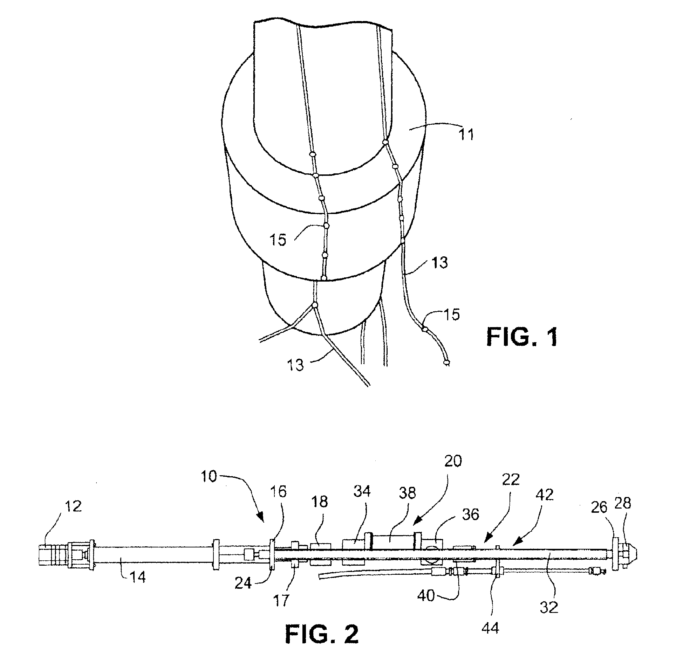

Differential pressure/standby liquid control ("dP/SLC") line penetration weld joints are one example of remotely located weld joints that can benefit from stress corrosion cracking mitigation by the brushing of such welds joints and their adjacent zones. One difficulty in accessing the dP/SLC penetration weld joints is the location of the dP/SLC pipes 11, which are located at the 180° azimuth at the most peripheral region of the reactor vessel bottom head. Another difficulty in accessing the dP/SLC penetration weld joints is the obstructions to such joints caused by the presence of no longer-used vibration sensor instrument strings 13 and the clips and shrouds 15 used to hold the strings 13 onto the dP/SLC pipes, as shown, for example, in Figure 1.

Flow-induced vibrations of the internal components of a nuclear reactor may also cause fatigue-initiated cracking and/or failures of such components. Because of the safety hazards associated with component failure in a nuclear reactor, it is also necessary to monitor the state or condition of internal components susceptible to vibration-induced damage. One type of internal reactor component which is monitored to determine flow-induced vibrations in a reactor is in-core monitor housings (ICMH). Core power is monitored by neutron flux monitors located within in-core monitor instruments supported by in-core monitor support assemblies. Each in-core monitor support assembly includes an instrumentation guide tube and an in-core monitor housing. A vibration sensor is mounted on the outside diameter of an in-core monitor housing.

Some tool vendors have designed tools for remotely servicing boiling water reactor ("BWR") vessels that can be used to proactively mitigate stress corrosion cracking in BWR internal components and welds. Access to the bottom of a reactor vessel is typically obstructed by various structures in the vessel. Thus, it can be challenging to fit tools past the obstructions to reach the bottom of a reactor vessel. Some tools include multi-piece manipulators that are assembled in the vessel at a location where the manipulator is to be used after the pieces of the manipulator have been inserted into the vessel at the work location. Many of these tools are manipulated by a technician using a handling pole that extends to the top of the reactor vessel. Often, however, the technicians are unable to adequately manipulate the tools with the poles to perform the activities necessary to service the reactor. A one-piece manipulator would eliminate the time needed to install and assemble the parts of a multi-part manipulator and, after use, to disassemble and remove the tool parts.

### BRIEF DESCRIPTION OF THE INVENTION

In an exemplary embodiment of the invention, a manipulator for accessing and servicing remote locations in a reactor vessel comprises a frame, an axial drive for rotating the frame, and a deployable arm mounted within the frame, the arm comprising a first rotary joint attached to the axial drive, a first pivot joint attached between the first rotation joint and a first end of an extension member, a second pivot joint attached to a second end of the extension member, a second rotary joint attached to the second pivot joint, a third pivot joint attached to the second rotary joint, and a tool mounted on the third pivot joint.

In another exemplary embodiment of the invention, a manipulator for accessing and servicing remote locations in a reactor vessel comprises a frame, an axial drive for rotating the frame, and a deployable arm mounted within the frame, the arm comprising a first rotary joint attached to the axial drive, a first pivot joint attached between the first rotation joint and a first end of an extension member, a second pivot joint attached to a second end of the extension member, a second rotary joint attached to the second pivot joint, a third pivot joint attached to the second rotary joint, and a tool mounted on the third pivot joint, the frame including an upper plate and a base plate mounted on a base that includes a plurality of latches for clamping the manipulator to various components in the reactor vessel, and having a linear dimension that allows the arm to be retracted within the frame for installation into, and removal from, the reactor vessel, the three pivot joints each being moved by a corresponding reversible servomechanism attached to a corresponding worm gear and the two rotary joints each being rotated by a corresponding reversible servomechanism.

### BRIEF DESCRIPTION OF THE DRAWINGS

There follows a detailed description of embodiments of the invention by way of example only with reference to the accompanying drawings, in which:
Figure 1 is a top perspective view of a dP/SLC pipe with vibration sensor instruments, strings and clips and shrouds holding the strings on the dP/SLC pipe.
Figure 2 is a side elevational view of the manipulator of the present invention, configured for installation and removal through the core plate of a nuclear reactor vessel.
Figure 3 is a top perspective view of the manipulator of Figure 2 in a deployed configuration to illustrate the various joints that give the manipulator its six degrees of freedom in movement.
Figure 4 is a cross-sectional view of the manipulator arm to illustrate the drives used to operate the several pivot and rotary joints included in the manipulator.
Figure 5 is a top plan view of the manipulator being lowered through the top guide and core plate of a reactor vessel into the reactor vessel.
Figure 6 is a top perspective view of the manipulator attached to a reactor vessel head for an approach to clips behind a small dP/SLC pipe for removal of the clips using water discharged by an ultra high pressure water jet attached to the end of the manipulator.
Figure 7 is a partial cross-sectional view of the manipulator installed on top of a control rod drive housing ("CRDH") with a latch in a deployed position to hold the manipulator in place.
Figure 8 is a perspective view of one example of a gripper tool that could be used with the manipulator of the present invention.
Figure 9 is a perspective view of one example of a cutter tool that could be used with the manipulator of the present invention.

### DETAILED DESCRIPTION OF THE INVENTION

The present invention is a manipulator tool for performing service activities in remote locations in a nuclear reactor vessel. The manipulator tool can be used to proactively mitigate stress corrosion cracking in BWR internal components and welds. The manipulator tool can also be modified to inspect and service in-core monitor housings in connection with mitigating fatigue-initiated cracking and/or component failures. The manipulator has six degrees of freedom in its ability to move so that it can fit past obstructions inside the reactor vessel to access remote locations.

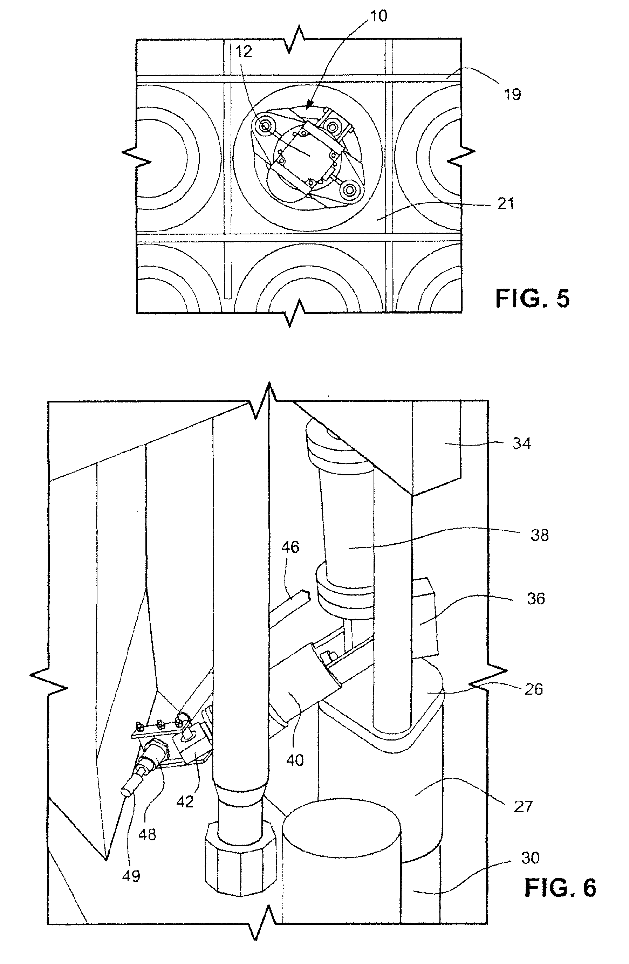

Figure 2 is a side view of the manipulator 10 of the present invention configured for installation and removal through the top guide 19 and core plate 21 (Figure 5) of a nuclear reactor vessel. In this configuration, a deployable arm 20 mounted within a mounting frame 22 is positioned so that all of the rotary and pivot joints that are part of arm 20 are in substantial axial alignment to minimize the radial dimension of manipulator 10.

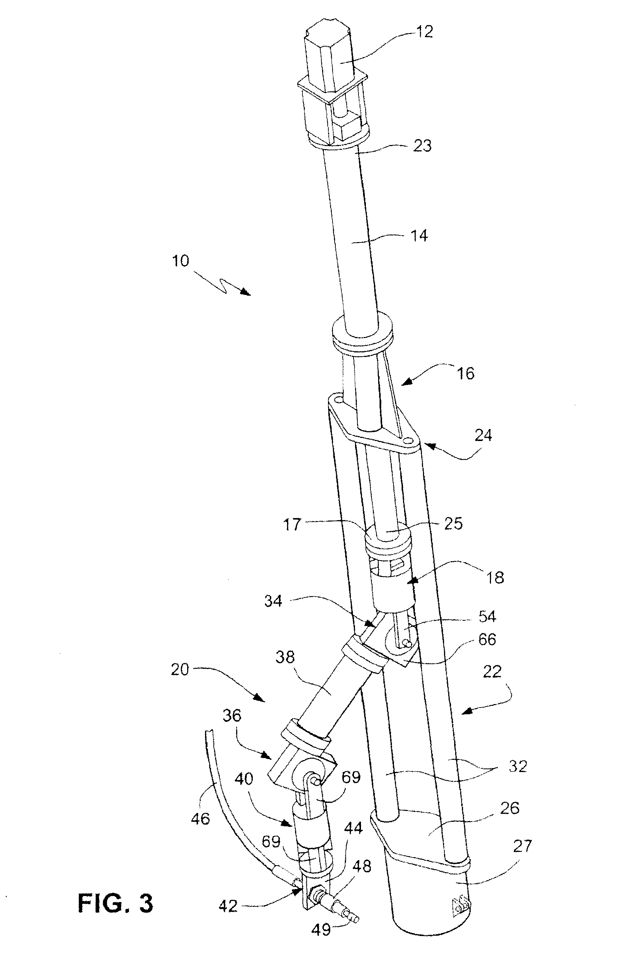

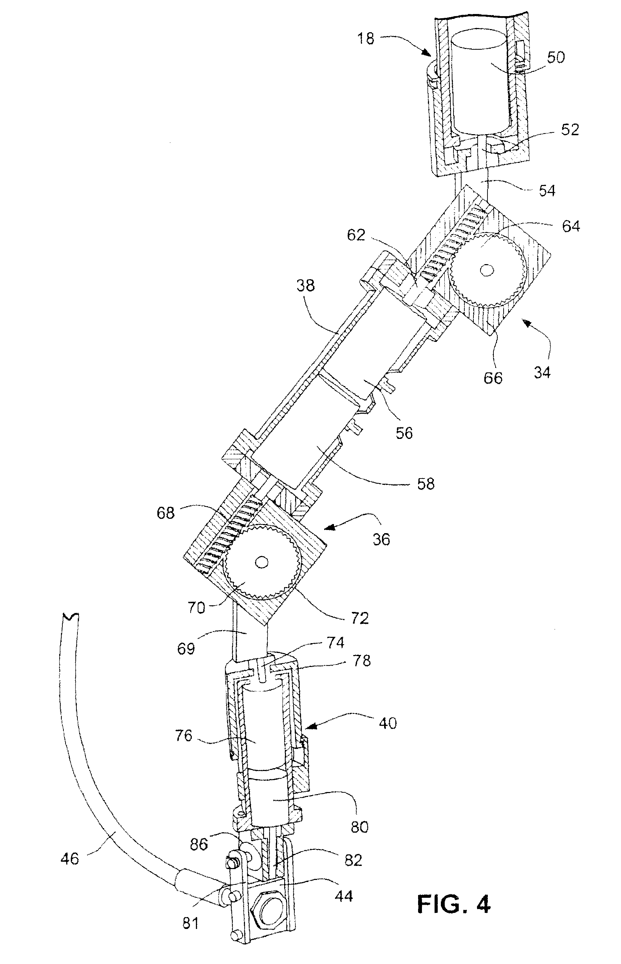

Figure 3 is a top perspective view of the manipulator 10 with arm 20 in a deployed configuration to illustrate the various rotary and pivot joints that give arm 20 its six degrees of freedom in movement. Figure 4 is a cross-sectional view of the manipulator arm 20 to illustrate the drives used to operate the several joints included in the manipulator.

Referring to Figures 2 and 3 first, manipulator 10 includes an axial drive 12 by which manipulator 10 is lowered into and lifted out of a reactor vessel and rotated within the reactor vessel. For this purpose, axial drive 12 is designed to be attached to a monorail hoist (not shown) that is used to move manipulator 10 into and out of and within a reactor vessel.

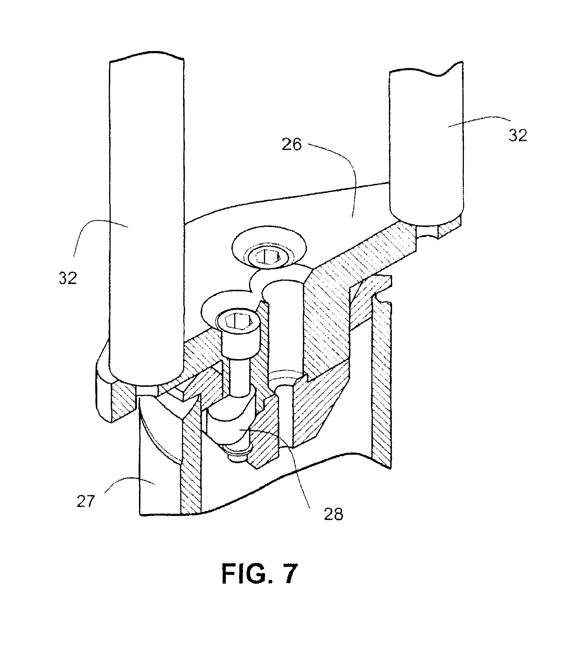

Attached to axial drive 12 is a drive shaft 14 that extends through a linear bearing 16 mounted on top of an upper plate 24 that is part of a mounting frame 22, within which is mounted arm 20 that is deployed to manipulate one of several tools used in the servicing of a reactor vessel. The proximal end 23 of shaft 14 is attached to axial drive 12, while the distal end 25 of shaft 14 is attached to arm 20. Besides upper plate 24, mounting frame 22 also includes a base plate 26 attached to a base 27. Within base 27 are a plurality of latches 28 (Figure 7) that are used to clamp base 27 to a component within the reactor vessel, such as control rod drive housings 30 ("CRDH") located at the bottom of a reactor vessel. Joining base plate 26 to upper plate 24 are two spacer rods 32, each having a dimension that allows arm 20 to be retracted to its insertion and removal position (Figure 2) within mounting frame 22. It should be noted that although two spacer rods 32 are shown in the figures, three or more spacer rods 32 or a half pipe (with a bottom window if needed for the rear to swing out) could be used. In addition, the components comprising frame 22 could be made from stainless steel, rather than aluminum, to provide greater bending strength. Axial drive 12 is used to move shaft 14 up and down, and thereby, raise and lower arm 20 within mounting frame 22.

Attached to the distal end 25 of shaft 14 is a plate 17, which, in turn, is attached to a first rotary joint 18 of arm 20, which allows arm 20 to be further rotated. Rotatably attached to first rotary joint 18 through a pair of arms 54 is a first pivot joint 34. Rigidly attached to first pivot joint 34 is a cylindrical extension member 38 that extends between first pivot joint 34 and a second pivot joint 36, also rigidly attached on the opposite end of extension member 38. First and second pivot joints 34 and 36 provide the first and second degrees of pivotal freedom in the movement of deployable arm 20.

Also rotatably attached to second pivot joint 36 through a pair of arms 69 is a second rotary joint 40 that provides the second degree of rotational freedom for deployable arm 20 to perform servicing operations in a nuclear vessel. For further freedom of movement of arm 20 there is rigidly attached to second rotary joint 40 a third pivot joint 42 within which is mounted a connector 44 for attaching various tools to arm 20 for servicing a reactor vessel. One of the tools that can be used with manipulator 10 is an ultra-high pressure ("UHP") water jet 48 that can be used to remove items, such as the vibration sensor instrument strings and clips and shrouds, discussed above. The water jet 48, which is shown in Figures 3 and 6, allows an ultra-high pressure jet of water to directed towards strings 13 and clips and shrouds 15 to remove them from reactor vessel components so that certain welds can be accessed and brushed to mitigate stress corrosion cracking. A hose 46 attached to jet 48, as shown in Figures 3 and 6, supplies the high pressure water which sprayed by jet 48 through a nozzle 49 towards a device to be removed within the reactor vessel.

Figure 4 is a cross-sectional view of arm 20, showing the various drives that are used to provide arm 20 with five degrees of freedom of motion used to perform maintenance services inside a reactor vessel. As can be seen from Figure 4, first rotary joint 18 includes a first reversible servomechanism ("servo") 50, which may be an electric motor or a hydraulic or pneumatic drive. Extending from servo 50 is a shaft 52, the rotation of which by servo 50 results in the rotation that provides a first degree of rotational movement within arm 20. The rotation of shaft 52 will result in the rotation of first pivot joint 34, second pivot joint 36, second rotary joint 40 and third pivot joint 42. It should be noted that first servo 50 is capable of rotating the first rotation joint 34 through a swing radius of 360 degrees; however, it normally rotates the first rotation joint +/-180 degrees to avoid twisting wires into a corkscrew.

Referring now to first pivot joint 34 and second pivot joint 36, as can be seen from Figure 4, first and second pivot joint 34 and 36 are rotated by worm gears. Mounted within cylinder 38 are second and third reversible servos 56 and 58. Attached to second servo 56 is a second shaft 62 that is shaped like a screw so as to be a worm for engaging and rotating a first worm gear 64 that is locked to an axis of rotation of a housing 66 that is part of first pivot joint 34. As worm 62 is caused to rotate in a first direction by the operation of second servo 56, worm gear 64 is caused to rotate in a first direction to either raise or lower first pivot joint 34. Conversely, when worm 62 is caused to rotate in the opposite direction, it causes worm gear 64 to also rotate in the opposite direction so as to move first pivot joint 34, also in the opposite direction. Worm 62 and worm gear 64 are capable of rotating first pivot joint 34 ninety degrees (90°) from the longitudinal axis of tool 10.

Similar to first pivot joint 34, second pivot joint 36 is moved by a third servo 58 mounted within cylinder 38 opposite second servo 56. Attached to third servo 58 is a third shaft 68 that is also shaped like screw so as to be a worm for engaging and rotating a worm gear 70 that is locked to an axis of rotation of a housing 72 that is part of second pivot joint 36. As worm 68 is caused to rotate in a first direction by the operation of third servo 58, worm gear 70 is caused to rotate in a first direction to either raise or lower second pivot joint 36. Conversely, when worm 68 is caused to rotate in the opposite direction, it causes worm gear 70 to also rotate in the opposite direction so as to move second pivot joint 36 in the opposite direction. Worm 68 and worm gear 70 are capable of rotating the second pivot joint 36 one hundred and eighty degrees (180°) about the longitudinal axis of the extension member 38.

Second rotary joint 40 includes a fourth reversible servo 76 mounted within a cylindrical extension member 78 and having a shaft 74 extending from fourth servo 76. Servo 76 rotates shaft 74 to rotate joint 40 +/- 180 degrees to provide a second degree of rotational movement within arm 20.

Similar to first and second pivot joints 34 and 36, third pivot joint 42 is also rotated by a fifth reversible servo 80 mounted within the cylinder 78 containing fourth servo 76. Fifth servo 80 is positioned opposite fourth servo 76 within cylinder 78. Extending from servo 80 is a fifth shaft 82 that is shaped like a screw so as to be a worm for engaging and rotating a worm gear 84 that is locked to an axis of rotation of a housing 86 that is part of third pivot joint 42. As worm 82 is caused to rotate in a first direction by the operation of fifth servo 80, worm gear 84 is caused to rotate in a first direction to either raise or lower third pivot joint 42. Conversely, when worm 82 is caused to rotate in the opposite direction, it causes worm gear 84 to also rotate in the opposite direction so as to move third pivot joint 42 in the opposite direction.

The manipulator 10 is designed for underwater operation in a nuclear radiation environment, such as a reactor vessel. It is designed to be remotely operated to manipulate tools to perform service activities at difficult to access regions of the reactor vessel. For illustrative purposes only, the manipulator 10 is shown in the figures as operating with an ultra-high pressure ("UHP") water jet 48, but it should be noted that manipulator 10 is designed to handle multiple tools for specific applications, including the water jet tool 48, a camera, a gripper, a cutter and a brush. Preferably, the brush tool will be a rotary tool for rotating a plurality of bristles against a desired location within the reactor vessel to mitigate corrosion, although other brush configurations could be used with the manipulator. Such tools will be attached to one or more rotary and/or pivots joints suitable for movement of a given tool for a given application and will be capable of being controlled electrically, pneumatically and/or hydraulically to perform the movement(s) necessary for a given servicing function within the reactor vessel. Such tools will also be capable of operating underwater in a nuclear environment.

As noted above, Figures 3 and 6 depict an ultra-high pressure ("UHP") water jet 48 that can be used to direct an ultra-high pressure jet of water towards items to be removed from a reactor vessel so that welds can be accessed and brushed to mitigate stress corrosion cracking. As shown in Figures 3 and 6, water jet 48 is mounted on third pivot joint 42. As also shown in Figures 3 and 6, a hose 46 is attached to jet 48 to supply the high pressure water which sprayed out of jet 48 through a nozzle 49 towards a device to be removed within the reactor vessel.

Figure 6 is also a top perspective view of the manipulator 10 attached to a reactor vessel head for an approach to clips and shrouds 15 behind a dP/SLC pipe 11 to remove the clips and shrouds 15 using water discharged by water jet 48. The manipulator 10 is positioned into place by axial drive 12, which attached to a monorail hoist (not shown) by which manipulator 10 is lowered into and lifted out of a reactor vessel and rotated within the reactor vessel. Figure 5 is a top plan view of the manipulator 10 being lowered through the top guide 19 and core plate 21 of a reactor vessel into the reactor vessel. Figure 2 shows manipulator 10 configured for this installation (and removal) through the top guide 19 and core plate 21. As shown in Figure 2, in this configuration, deployable arm 20 is positioned so that all of the rotary and pivot joints that are part of arm 20 are in substantial axial alignment to position arm 20 within mounting frame 22 to thereby minimize the radial dimension of manipulator 10.

Once manipulator 10 has been lowered through top guide 19 and core plate 21 at a point that will locate manipulator 10 at a desired location within the reactor vessel, base 27 of manipulator 10 is positioned over a selected component within the reactor vessel. Thus, for example, Figure 6 shows base 27 positioned over control rod drive housings 30 ("CRDH") located at the bottom of a reactor vessel. Within base 27 are a plurality of latches 28 that are used to then clamp base 27 to the control rod drive housing 30. Figure 7 is a partial cross-sectional view of the manipulator 10 installed on top of the CRDH 30 with a latch 28 in a deployed position to hold the manipulator 10 in place. At the point that the manipulator 10 is clamped to CRDH 30, arm 20 is deployed in a manner like that shown in Figures 3, whereupon the several rotary and pivot joints forming arm 20 are remotely manipulated to further move a tool, such as water jet 48, to a desired location to perform some task, like that shown in Figure 6, where water jet 48 is shown approaching clips and shrouds 15 behind a dP/SLC pipe 11 to remove the clips and shrouds 15 using water discharged by water jet 48.

Cables (not shown) extend from the tool 10 to the top of the reactor vessel. Feedback from the servos provide the position information to a manipulator controller. Video cameras (not shown) provide an operator with a view of the position of the tool 10 within the reactor vessel. The operator controls the tool via a human interface (not shown) which assists the operator by interpreting the operator manipulation of a joystick into motion of the manipulator 10.

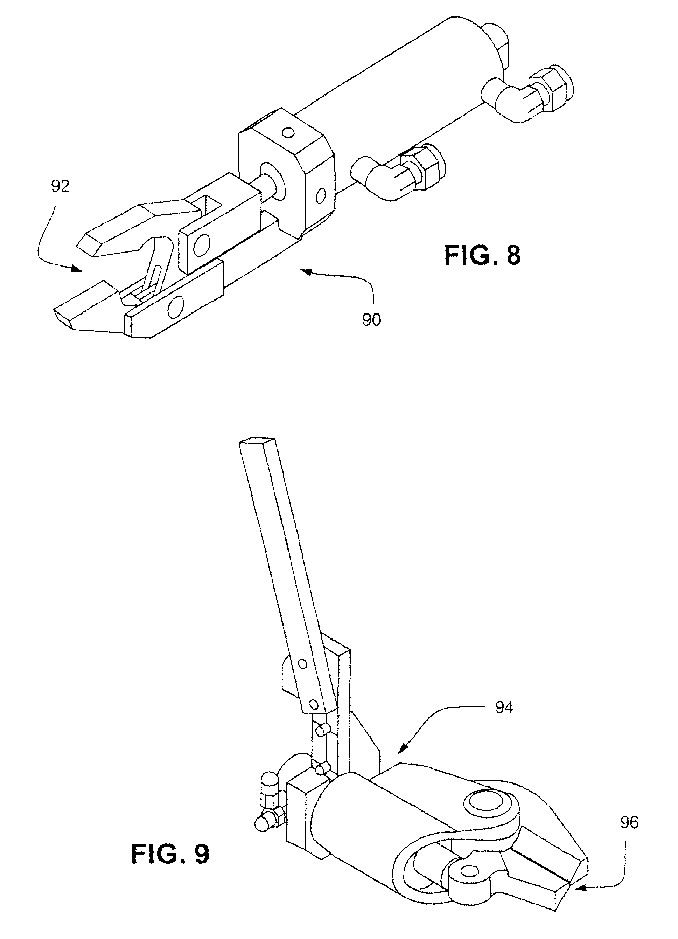

Figure 8 and 9 depict two examples of alternative tools that manipulator 10 is designed to handle for specific applications. Thus, Figure 8 is a perspective view of one example of a gripper tool 90 with a pair of jaws 92 for gripping that could be used with arm 20 of manipulator 10, while Figure 9 is a perspective view of one example of a cutter tool 94 with a pair of jaws 96 for cutting that could be used with arm 20 of manipulator 10.

Various aspects and embodiments of the present invention are defined by the following numbered clauses:
1. A manipulator for accessing and servicing remote locations in a reactor vessel, the manipulator comprising:
   a frame,
   an axial drive for rotating the frame, and
   a deployable arm mounted within the frame, the arm comprising:
      a first rotary joint attached to the axial drive,
      a first pivot joint attached between the first rotation joint and a first end of an extension member,
      a second pivot joint attached to a second end of the extension member,
      a second rotary joint attached to the second pivot joint,
      a third pivot joint attached to the second rotary joint, and
      a tool mounted on the third pivot joint.
2. The manipulator of clause 1, wherein the frame includes an upper plate and a base plate mounted on a base including a plurality of latches for clamping the manipulator to various components in the reactor vessel, and a plurality of rods extending between the upper plate and the base plate, each rod having a linear dimension that allows the arm to be retracted within the frame for installation of the manipulator into, and removal from, the reactor vessel.
3. The manipulator of clause 1 further comprising a drive shaft extending through a linear bearing from the axial drive to the frame.
4. The manipulator of clause 1, wherein the first rotary joint includes a first servomechanism with a first shaft extending from the first servomechanism to a drive shaft attached to the axial drive.
5. The manipulator of clause 4, wherein the first pivot joint and the second pivot joint include second and third servomechanisms mounted within the extension member, the second and third servomechanisms including second and third shafts that are first and second worms, respectively, for engaging and rotating first and second worm gears fixedly attached to the first and second pivot joints' respective axes.
6. The manipulator of clause 5, wherein the second rotary joint includes a fourth servomechanism with a fourth shaft connected to the third pivot joint.
7. The manipulator of clause 6, wherein the third pivot joint includes a fifth servomechanism with a fifth shaft connected to a third worm for engaging and rotating a third worm gear fixedly attached to the axis of the third pivot joint.
8. The manipulator of clause 1, wherein the tool is a water jet.
9. The manipulator of clause 8, wherein the water jet is attached to a hose that supplies ultra high pressurized water to the water jet, and wherein the water jet includes a nozzle for delivering the pressurized water to an object in the reactor vessel.
10. The manipulator of clause 1, wherein the tool is a gripper.
11. The manipulator of clause 1, wherein the tool is a cutter.
12. The manipulator of clause 1, wherein the tool is a camera.
13. The manipulator of clause 1, wherein the tool is a brush.
14. The manipulator of clause 4, wherein the first servomechanism rotates the first rotation joint through a swing radius of +/- 180 degrees.
15. The manipulator of clause 5, wherein the first worm and the first worm gear are capable of rotating the first rotary joint 90 degrees from the longitudinal axis of the manipulator.
16. The manipulator of clause 5, wherein the second worm and the second worm gear are capable of rotating the second rotary joint +/- 180 degrees about the longitudinal axis of the extension member extending between the first and second pivot joints.
17. The manipulator of clause 6, wherein the fourth servomechanism is capable of rotating the second rotation joint through a swing radius of +/- 180 degrees.
18. The manipulator of clause 1, wherein each of the five servomechanisms are a device selected from the group consisting of an electric motor, a hydraulic drive and a pneumatic drive.
19. The manipulator of clause 1, wherein the three pivot joints are each moved by a corresponding reversible servomechanism attached to a corresponding worm gear and the two rotary joints are each rotated by a corresponding reversible servomechanism.
20. The manipulator of clause 2, wherein the frame upper plate, base plate and rods are made from Stainless steel.
21. A manipulator for accessing and servicing remote locations in a reactor vessel, the manipulator comprising:
   a frame,
   an axial drive for rotating the frame, and
   a deployable arm mounted within the frame, the arm comprising:
      a first rotary joint attached to the axial drive,
      a first pivot joint attached between the first rotation joint and a first end of an extension member,
      a second pivot joint attached to a second end of the extension member,
      a second rotary joint attached to the second pivot joint,
      a third pivot joint attached to the second rotary joint, and
      a tool mounted on the third pivot joint,
   the frame including an upper plate and a base plate mounted on a base that includes a plurality of latches for clamping the manipulator to various components in the reactor vessel, and a plurality of rods extending between the upper plate and the base plate, each rod having a linear dimension that allows the arm to be retracted within the frame for installation into, and removal from, the reactor vessel,
   the three pivot joints each being moved by a corresponding reversible servomechanism attached to a corresponding worm gear and the two rotary joints each being rotated by a corresponding reversible servomechanism.
22. The manipulator of clause 19, wherein the tool is selected from the group consisting of a water jet, a gripper, a cutter, a brush and a camera.
23. A method of accessing and servicing remote locations in a nuclear reactor vessel, the method comprising the steps of:
   providing a manipulator comprising:
      a mounting frame,
      an axial drive for rotating the mounting frame, and
      a deployable arm mounted within the frame, the arm comprising:
   a first rotary joint attached to the axial drive,
   a first pivot joint attached between the first rotation joint and a first end of an extension member,
   a second pivot joint attached to a second end of the extension member,
   a second rotary joint attached to the second pivot joint,
   a third pivot joint attached to the second rotary joint, and
   at least one tool mounted on the third pivot joint suitable for performing a predetermined servicing operation,
   configuring the manipulator for installation through a top guide and core plate of the nuclear reactor vessel by positioning the deployable arm within the mounting frame so that all of the rotary and pivot joints comprising the arm are in substantial axial alignment to minimize the radial dimension of the manipulator,
   attaching the axial drive to a hoist used to lower the manipulator into, raise the manipulator out of and move the manipulator within the reactor vessel,
   lowering the manipulator through the top guide and core plate of the nuclear reactor vessel and moving the manipulator to a predefined location within the nuclear reactor vessel,
   attaching a base of the manipulator frame to a selected component within the nuclear reactor vessel at the predefined location,
   activating the rotary and pivot joints comprising the arm, as necessary, to position the deployable arm out of the mounting frame to thereby position the tool to perform the predetermined servicing operation within the nuclear reactor vessel,
   upon completing the predetermined servicing operation, configuring the manipulator for withdrawal through the top guide and core plate of the nuclear reactor vessel by again positioning the deployable arm within the mounting frame so that all of the rotary and pivot joints comprising the arm are again in substantial axial alignment to minimize the radial dimension of the manipulator,
   moving the manipulator from the predefined location within the nuclear reactor vessel to a position suitable for raising the manipulator through the top guide and core plate and out of the nuclear reactor vessel.
24. The method of clause 23, wherein the tool is selected from the group consisting of a water jet, a gripper, a cutter, a brush and a camera.
25. The method of clause 23, wherein the frame includes an upper plate and a base plate mounted on the base, and wherein the base includes a plurality of latches for clamping the manipulator to various components in the reactor vessel.

## Claims

1. A manipulator (10) for accessing and servicing remote locations in a reactor vessel, the manipulator (10) comprising:
a frame (22),
an axial drive (12) for rotating the frame, and
a deployable arm (20) mounted within the frame (22), the arm (20) comprising:
a first rotary joint (18) attached to the axial drive (12),
a first pivot (34) joint attached between the first rotation joint (18) and a first end of an extension member (38),
a second pivot joint (36) attached to a second end of the extension member (38),
a second rotary joint (40) attached to the second pivot joint (36),
a third pivot joint (42) attached to the second rotary joint (40), and
a tool (48, 90, 94) mounted on the third pivot joint (42).

2. The manipulator (10) of claim 1, wherein the frame (22) includes an upper plate (24) and a base plate (26) mounted on a base (27) including a plurality of latches (28) for clamping the manipulator (10) to various components in the reactor vessel, and a plurality of rods (32) extending between the upper plate (24) and the base plate (26), each rod (32) having a linear dimension that allows the arm (20) to be retracted within the frame (22) for installation of the manipulator (10) into, and removal from, the reactor vessel.

3. The manipulator (10) of claim 1 or 2 further comprising a drive shaft (14) extending through a linear bearing (16) from the axial drive (12) to the frame (22).

4. The manipulator (10) of any of the preceding claims, wherein the first rotary joint (18) includes a first servomechanism (50) with a first shaft (52) extending from the first servomechanism (50) to a drive (14) shaft attached to the axial drive (12).

5. The manipulator (10) of claim 4, wherein the first pivot (34) joint and the second pivot joint (36) include second and third servomechanisms (56,58) mounted within the extension member (38), the second and third servomechanisms (56,58) including second and third shafts (62,68) that are first and second worms (62,68), respectively, for engaging and rotating first and second worm gears (64,70) fixedly attached to the first and second pivot joints' (34,36) respective axes.

6. The manipulator (10) of claim 5, wherein the second rotary joint (40) includes a fourth servomechanism (76) with a fourth shaft (74) connected to the third pivot joint (42).

7. The manipulator (10) of claim 6, wherein the third pivot joint (42) includes a fifth servomechanism (80) with a fifth shaft (82) connected to a third worm (68) for engaging and rotating a third worm gear (70) fixedly attached to the axis of the third pivot joint (42).

8. The manipulator (10) of claim 7, wherein each of the five servomechanisms (50,56,58,76,80) are a device selected from the group consisting of an electric motor, a hydraulic drive and a pneumatic drive.

9. The manipulator (10) of any of the preceding claims, wherein the three pivot joints (34,36,42) are each moved by a corresponding reversible servomechanism (50,58,80) attached to a corresponding worm gear (64,70) and the two rotary joints (18,40) are each rotated by a corresponding reversible servomechanism (50, 76).

10. The manipulator (10) of any of the preceding claims, wherein the tool is selected from the group consisting of a water jet (48), a gripper (90), a cutter (94), a brush and a camera.

11. A manipulator for accessing and servicing remote locations in a reactor vessel, the manipulator comprising:
a frame,
an axial drive for rotating the frame, and
a deployable arm mounted within the frame, the arm comprising:
a first rotary joint attached to the axial drive,
a first pivot joint attached between the first rotation joint and a first end of an extension member,
a second pivot joint attached to a second end of the extension member,
a second rotary joint attached to the second pivot joint,
a third pivot joint attached to the second rotary joint, and
a tool mounted on the third pivot joint,
the frame including an upper plate and a base plate mounted on a base that includes a plurality of latches for clamping the manipulator to various components in the reactor vessel, and a plurality of rods extending between the upper plate and the base plate, each rod having a linear dimension that allows the arm to be retracted within the frame for installation into, and removal from, the reactor vessel,
the three pivot joints each being moved by a corresponding reversible servomechanism attached to a corresponding worm gear and the two rotary joints each being rotated by a corresponding reversible servomechanism.

12. The manipulator of claim 11, wherein the tool is selected from the group consisting of a water jet, a gripper, a cutter, a brush and a camera.

13. A method of accessing and servicing remote locations in a nuclear reactor vessel, the method comprising the steps of:
providing a manipulator comprising:
a mounting frame,
an axial drive for rotating the mounting frame, and
a deployable arm mounted within the frame, the arm comprising:
a first rotary joint attached to the axial drive,
a first pivot joint attached between the first rotation joint and a first end of an extension member,
a second pivot joint attached to a second end of the extension member,
a second rotary joint attached to the second pivot joint,
a third pivot joint attached to the second rotary joint, and
at least one tool mounted on the third pivot joint suitable for performing a predetermined servicing operation,
configuring the manipulator for installation through a top guide and core plate of the nuclear reactor vessel by positioning the deployable arm within the mounting frame so that all of the rotary and pivot joints comprising the arm are in substantial axial alignment to minimize the radial dimension of the manipulator,
attaching the axial drive to a hoist used to lower the manipulator into, raise the manipulator out of and move the manipulator within the reactor vessel,
lowering the manipulator through the top guide and core plate of the nuclear reactor vessel and moving the manipulator to a predefined location within the nuclear reactor vessel,
attaching a base of the manipulator frame to a selected component within the nuclear reactor vessel at the predefined location,
activating the rotary and pivot joints comprising the arm, as necessary, to position the deployable arm out of the mounting frame to thereby position the tool to perform the predetermined servicing operation within the nuclear reactor vessel,
upon completing the predetermined servicing operation, configuring the manipulator for withdrawal through the top guide and core plate of the nuclear reactor vessel by again positioning the deployable arm within the mounting frame so that all of the rotary and pivot joints comprising the arm are again in substantial axial alignment to minimize the radial dimension of the manipulator,
moving the manipulator from the predefined location within the nuclear reactor vessel to a position suitable for raising the manipulator through the top guide and core plate and out of the nuclear reactor vessel.

14. The method of claim 13, wherein the tool is selected from the group consisting of a water jet, a gripper, a cutter, a brush and a camera.

15. The method of claim 13 or 14, wherein the frame includes an upper plate and a base plate mounted on the base, and wherein the base includes a plurality of latches for clamping the manipulator to various components in the reactor vessel.
